# EUROPEAN PATENT APPLICATION

(11) **EP 3 593 888 A1**
(43) Date of publication of application: **15.01.2020**
(21) Application number: 18182491.3
(22) Date of filing: 09.07.2018
(51) Int. Cl.: B01D 53/02, B01D 53/04

(54) **FILTER DEVICE**

(71) Applicant: Archroma IP GmbH, 4153 Reinach (CH)
(72) Inventor: Royek, Jürgen, 79379 Müllheim (DE); Nusser, Rainer, 79395 Neuenburg am Rhein (DE)
(74) Representative: Ricker, Mathias

(57) **Abstract**

The invention relates to a filter device comprising at least one adsorbent capable of adsorbing nitrogen oxides, NOₓ, and at least one indicator composition, wherein the at least one indicator composition comprises at least one dye and wherein the at least one dye is sensitive towards nitrogen oxides, NOₓ, such that the adsorption performance of the filter device towards nitrogen oxide, NOₓ, is indicated by the indicator composition.

## Description

### FIELD OF THE INVENTION

The invention relates to a filter device sensitive to nitrogen oxides, a process for monitoring the performance of a filter device exposed to nitrogen oxides, the use of nitrogen sensitive dyes in filter devices and the manufacturing of a nitrogen oxides, NOₓ, adsorbing filter device.

### BACKGROUND OF THE INVENTION

Filter devices may be used for a large variety of filtration processes. Many of those filtration processes are based on adsorption wherein activated carbon is used as a predominant adsorbent. Activated carbon is known to exhibit a porous structure which provides a porous surface area which is active to adsorb molecules in liquid and gaseous filtration processes.

Activated carbon is used in filter devices for the purification of exhaust air in buildings and industry plants and in this respect also in air-conditioning devices. Further, activated carbon is also used as an adsorbent material in the processing of combustion gases to adsorb especially environmental harmful substances.

Among a number of known harmful substances nitrogen oxides, NOₓ are known to put a severe health risk to humans and environment. It is therefore a steady goal to reduce the exposure of nitrogen oxides, NOₓ to humans. Thus, many filter devices for air cleaning and combustion gas processing are equipped with appropriate adsorbents, like activated carbon, to reduce the nitrogen oxide contamination of air. Appropriate filter devices are used for example in cars for cleaning inflowing, nitrogen oxide-polluted air which originates from traffic exhaust gases.

The adsorption capacity of adsorbents in filter devices is however naturally limited. Once the adsorption capacity of said adsorbents is reached adsorption becomes inactive and the filter device can no longer effect decontamination. Filter devices or adsorbent materials of the filter devices then have to be replaced with new devices or adsorbents which are active to nitrogen oxide adsorption. However, it remains important to determine the exhaustion of the nitrogen oxide adsorption capacity of the filter device to replace exhausted filter devices in time and prevent undesired environmental NOₓ contamination.

Further with the aim of a fast and easy replacement of the adsorption material or filter device it becomes also important that any detection of said nitrogen oxide adsorption capacity can be easily performed and the appropriate filter devices can be easily replaced. It is therefore desirable to have indicators directly on the filter device from which said nitrogen oxide adsorption capacity can be directly detected. Further, since filter devices for the detection of nitrogen oxides are often used as disposables it is a further aim to provide cheap indicators, which may be disposed together with the exhausted filter device.

JPH01-244361 discloses a gas detecting element comprising a thin film containing squarylium compounds which react reversibly with gases NOₓ, SOₓ, Cl₂, O₃, NH₃. Gases may be detected upon measurement of colour change and intensity change of fluorescent light.

EP 0 903 573 A2 discloses a sensor membrane for use in an optode. The sensor membrane contains an indicator which changes absorption characteristics when contacted with an analyte gas. It is suggested to use ion pair dyes like eosin, phenolphtaleine or fluorescine derivatives as indicator substance and in particular cobyrinic acid and Co(III) complexes of N-donor ligands comprising corrine, phtalocyanine, corrole, porphyrine as indicator substances for the detection of NOₓ gases.

EP 1 163 913 A2 discloses an indicator compound for the detection of an oxidation-type sterilant. Ozone, peroxide, chlorine, dioxide or peracetic acid are disclosed as representative sterilants. Said indicator compounds are heterocyclic-, diazo- and amino-nitrogen free compounds chosen from anthraquinone, triarylmethane or xanthene dyes. Indicator compounds are suitable for monitoring sterilization processes via a colour change when exposed to said gaseous sterilants.

US 6,117,685 discloses an ozone indicator comprising at least one color-change layer with an ozone sensor ink and at least one non-color-change layer formed in superimposed layers on a substrate. The ozone sensor ink may be an ink containing anthraquinone dye having at least one amino group.

### OBJECT OF THE INVENTION

It has been an object of the present invention to provide a replaceable and disposable nitrogen oxides, NOₓ, adsorbing filter device which enables easy detection of the exhaustion of the adsorption capacity of nitrogen oxides, NOₓ, such that depletion of the adsorption capacity of the filter device can be easily determined.

### SUMMARY OF THE INVENTION

A first aspect of the invention relates to a filter device comprising at least one adsorbent capable of adsorbing nitrogen oxides, NOₓ, and at least one indicator composition, wherein the at least one indicator composition comprises at least one dye and wherein the at least one dye is sensitive towards nitrogen oxides, NOₓ.

In one embodiment of the first aspect of the invention the filter device accommodates at least one filter substrate comprising the at least one adsorbent capable of adsorbing nitrogen oxides, NOₓ.

In one embodiment of the first aspect of the invention the at least one dye of the at least one indicator composition starts fading when the dye is contacted with nitrogen oxides, NOₓ.

In one embodiment of the first aspect of the invention the at least one dye comprised in the at least one indicator composition is chosen from the group consisting of anthraquinone dyes, bisoxazin dyes, flavin dyes, or mixtures thereof.

In one embodiment of the first aspect of the invention the at least one dye is an anthraquinone compound of formula (I): 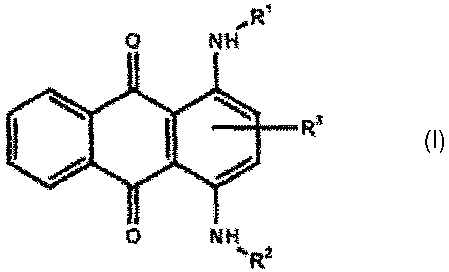 wherein
- R¹, R²: signifies independently from each other hydrogen, linear, branched or cyclic C₁₋₁₀ alkyl, phenyl, wherein the phenyl is a residue of formula (Ia) 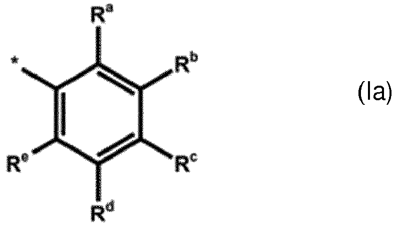 wherein
R^{a} R^{b}, R^{c}, R^{d}, R^{e} signify independently from each other hydrogen, sulfo group, sulfon amid group, sulfon anilido group, amino group, C₁₋₆ alkyl substituted secondary or tertiary amino group, C₁₋₆ acylated amino group, C₁₋₆ alkyl and C₁₋₆ acyl substituted amino group
* signifies the binding to the anthraquinone bound amino group,
- R³: signifies hydrogen, sulfo group, linear, branched or cyclic C₁₋₆ alkoxy, or sulfo-phenyl substituted C₁₋₆ alkoxy, or phenoxy of formula (lb): 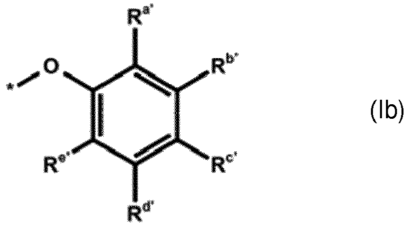 wherein
R^{a}', R^{b}', R^{c}', R^{d}', R^{e}' signify independently from each other hydrogen, sulfo group, sulfon amid group, sulfon anilido group, amino group, C₁₋₆ alkyl substituted secondary or tertiary amino group, C₁₋₆ acylated amino group, C₁₋₆ alkyl and C₁₋₆ acyl substituted amino group,
* signifies the binding to the anthraquinone moiety;
or the at least one dye is a flavin dye of formula (II): 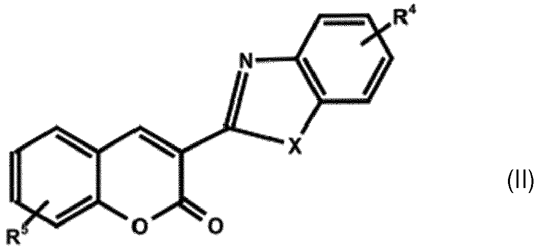 wherein
- R⁴, R⁵: signify independently from each other hydrogen, sulfo group, sulfon amid group, sulfon anilido group, amino group, C₁₋₆ alkyl substituted secondary or tertiary amino group, C₁₋₆ acylated amino group, C₁₋₆ alkyl and C₁₋₆ acyl substituted amino group,
- X: signifies oxygen, hydrogen substituted nitrogen, C₁₋₆ alkyl substituted nitrogen;
or the at least one dye is a bisoxazin dye of formula (III): 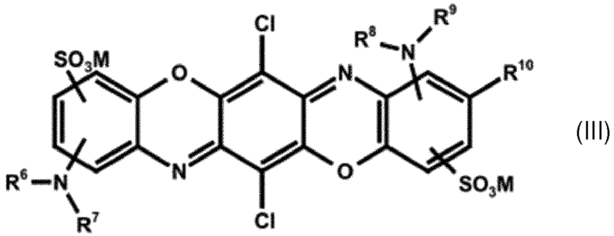 wherein
- R⁶, R⁷, R⁸ R⁹, R¹⁰: signify independently from each other hydrogen, linear or branched or cyclic C₁₋₆ alkyl, C₁₋₆ acyl,
- M: signifies alkali metal or hydrogen.

In one embodiment of the first aspect of the invention the at least one dye comprised in the at least one indicator composition exhibits an emission maximum in the range of visible blue light, preferably in the wavelength range of 460 to 480 nm. After being contacted with NOₓ, the dye of the dyed substrate starts fading

In one embodiment of the first aspect of the invention the at least one adsorbent capable of adsorbing nitrogen oxides, NOₓ, comprises or consists of activated carbon.

In one further embodiment of the first aspect of the invention, wherein the filter device accommodates at least one filter substrate comprising the at least one adsorbent capable of adsorbing nitrogen oxides, NOₓ, the at least one indicator composition comprising the at least one dye sensitive towards nitrogen oxides, NOₓ, is arranged on the at least filter substrate.

In one further embodiment of the first aspect of the invention, wherein the filter device accommodates at least one filter substrate comprising the at least one adsorbent capable of adsorbing nitrogen oxides, NOₓ, the at least one indicator composition is deposed to one surface of the at least one filter substrate.

In one further embodiment of the first aspect of the invention, wherein the filter device accommodates at least one filter substrate comprising the at least one adsorbent capable of adsorbing nitrogen oxides, NOₓ, the filter substrate consists of one or more layers.

In one further embodiment of the first aspect of the invention, wherein the filter device accommodates at least one filter substrate comprising the at least one adsorbent capable of adsorbing nitrogen oxides, NOₓ, the at least one filter substrate comprises or consists of fibrous material like non-woven, fleece or mesh, membrane like tubular, hollow fiber or flat sheet membrane, particulates like granules, powder or beads, or composites thereof.

In one further embodiment of the first aspect of the invention, wherein the filter device accommodates at least one filter substrate comprising the at least one adsorbent capable of adsorbing nitrogen oxides, NOₓ, at least one layer of the at least one filter substrate comprises or consists of the at least one adsorbent capable of adsorbing nitrogen oxides, NOₓ, the adsorbent being preferably activated carbon.

In one further embodiment of the first aspect of the invention, wherein the filter device accommodates at least one filter substrate comprising the at least one adsorbent capable of adsorbing nitrogen oxides, NOₓ, the at least one filter substrate comprising or consisting of the at least one adsorbent capable of adsorbing nitrogen oxides, NOₓ, preferably activated carbon, is a particulate layer.

In one further embodiment of the first aspect of the invention, wherein the filter device accommodates at least one filter substrate comprising the at least one adsorbent capable of adsorbing nitrogen oxides, NOₓ, the at least one filter substrate comprises at least one layer comprising the at least one indicator composition.

In one further embodiment of the first aspect of the invention, wherein the filter device accommodates at least one filter substrate comprising the at least one adsorbent capable of adsorbing nitrogen oxides, NOₓ, the at least one layer comprising the at least one indicator composition is deposed to one surface of the at least one filter substrate.

In one further embodiment of the first aspect of the invention, wherein the filter device accommodates at least one filter substrate comprising the at least one adsorbent capable of adsorbing nitrogen oxides, NOₓ, the at least one dye sensitive to nitrogen oxides, NOₓ, present in the at least one indicator composition in the at least one layer of the at least one filter substrate is present in an amount of 0.1 g/kg to 100 g/kg with regard to the total weight of the filter substrate.

A second aspect of the invention relates to a method of monitoring the performance of a filter device in the filtration process of gaseous media containing nitrogen oxides, NOₓ, wherein the method comprises the following steps:
- providing a filter device as described in at least one of the above outlined embodiments, comprising at least one adsorbent and at the least one indicator composition,
- exposing said filter device to a gaseous media containing nitrogen oxides, NOₓ, wherein the gaseous media containing nitrogen oxides, NOₓ, passes the adsorbent first and subsequently contacts the indicator composition,
- observing a color fading of the indicator composition, once the adsorbent in the filter device or the filter substrate is depleted.

In one embodiment of the second aspect of the invention the color fading of the indicator composition is measured according to standard ISO 105-G01:2016-12.

A third aspect of the invention relates to the use of a dye as defined in at least one embodiment of the first aspect of the invention for indication of the presence of nitrogen oxides, NOₓ.

In one embodiment of the third aspect of the invention the dye is used in a filter device according to at least one embodiment of the first aspect of the invention.

A fourth aspect of the invention relates to the use of a dye as defined in the first aspect of the invention for indication of the presence of nitrogen oxides, NOₓ, by color fading. In one embodiment of the fourth aspect of the invention, the dye is used in a filter device according to the first aspect of the invention.

A fifth aspect of the invention relates to the use of a filter device according to at least one embodiment of the first aspect of the invention in a purification process of exhaust air, combustion gas and circulation air.

A sixth aspect of the invention relates to a method of manufacturing a filter device wherein the filter device accommodates at least one filter substrate comprising the at least one adsorbent capable of adsorbing nitrogen oxides, NOₓ, according to at least one embodiment of the first aspect of the invention wherein the method comprises the steps:
- providing at least one filter substrate comprising at least one adsorbent capable of adsorbing nitrogen oxides, NOₓ,
- providing an indicator composition comprising at least one dye sensitive towards nitrogen oxides, NOₓ,
- applying the indicator composition to one exposed layer of the filter substrate by padding spraying, coating, exhausting, foaming, calendaring or deposition.

### DETAILED DESCRIPTION OF THE INVENTION

A first aspect of the invention relates to a filter device comprising at least one adsorbent capable of adsorbing nitrogen oxides, NOₓ, and at least one indicator composition, wherein the at least one indicator composition comprises at least one dye and wherein the at least one dye is sensitive towards nitrogen oxides, NOₓ.

The filter device according to the invention has the advantage that the adsorption capacity limit of the filter device for nitrogen oxides, NOₓ, can be indicated by the at least one indicator composition comprising at least one dye which is sensitive to nitrogen oxides by means of optical inspection. The adsorption capacity limit can be monitored optically by analyzing the change of the optical appearance of the at least one dye which is sensitive towards nitrogen oxides, NOₓ.

In one embodiment of the first aspect of the invention the filter device accommodates at least one filter substrate comprising the at least one adsorbent capable of adsorbing nitrogen oxides, NOₓ.

Within the present application the term *"filter device"* relates to any apparatus able to filter substances from a filtration fluid which is passed through the filter device. Within this understanding a filter device is characterized by constructional features such as a housing for accommodating the adsorbent or the filter substrate, an ingress side comprising an inlet for fluids to be filtered, an egress side comprising an outlet for filtered fluids which have passed the adsorbent or the filter substrate and optionally further constructional parts to fit and fix the filter device in a respective purification units. The filter device may have the form of a frame or a cartridge of a exchangeable module accommodation the filter substrate.

With the term *"filter substrate"* a filtration material is meant which comes directly into contact with a filtration fluid and which is able to hold back certain contaminants present in the filtration fluid passing the filter substrate for example by mechanisms of size exclusion or adsorption to an adsorbent. Normally an *"adsorbent"* is added to the filter substrate to effect desired adsorption of contaminants. Alternatively, the adsorbent can be placed directly into the filter device. Within the present application an adsorbent is meant to be a material which can remove pollutants from *filtration fluids* by physical adsorption or chemical adsorption.

According to the present application the term *"filtration fluid'* is meant to be a gaseous or liquid fluid, e.g. a gas, aerosol, dispersion, suspension, or a solution containing contaminants like nitrogen oxides, NOₓ, which are to be depleted from the filtration fluid by filtration and/or adsorption. The terms *"nitrogen oxides"* and *"NOₓ"* are representatives for a group of compounds consisting of oxygen and nitrogen. In this respect, several nitrogen oxides are known as contaminants in fluids and which are harmful. Within the present application the term *"NOₓ"* encompasses the members of said group of compounds. Variable x stands for a diverse stoichiometry of these compounds and is a digit between 0.5 ≤ x ≥ 2.5. Most commonly known nitrogen oxide contaminants are NO and NO₂. Often, these nitrogen oxides, NOₓ, are contaminants contained in combustion air.

In this respect, it was found that in case the adsorption capacity of the at least one adsorbent declines or is exhausted the at least one dye in the at least one indicator composition changes its optical appearance due to chemical interaction with non-adsorbed NOₓ. Thus, in case the adsorption capacity limit for nitrogen oxides of the adsorbent is reached, decontamination of the filtration fluid cannot occur anymore and NOₓ will pass the adsorbent without being adsorbed. In this case the at least one dye of the at least one indicator composition will be directly exposed to the NOₓ containing filtration fluid and thus the optical appearance of the dye will change. Thus, the declining or nonexistent NOₓ adsorption can be directly indicated by the change of the optical appearance of the at least one dye contained in the at least one indicator composition. The change of the appearance of the dye can be detected by any kind of optical detection methods, for example methods suitable for detecting a color fading in the visible and UV wavelength range of light. Typically, the color fading may be detected by visible inspection or by photometric inspection via photodetectors. The invention, however, provides the advantage that the change in the optical appearance can be in particular detected by visible detection.

Within the present application the term *"optical appearance"* relates to the optical characteristics of the dye like color, shading, or brightness. A change in the optical appearance means that, for example, the color of the at least one dye may change during the exposure to NOₓ. Further, it can be also a characteristic for the change of the optical appearance of the at least one dye that brightness of the dye changes. A significant change in the optical appearance of the at least one dye in the at least one indicator composition indicates also a significant change in the adsorption capacity of the adsorbent, in particular a decline of the adsorption capacity for NOₓ of the filter device occurs.

The at least one indicator composition including the at least one dye may be applied to certain parts of the filter device which are accessible for optically inspection. For example, it is possible to apply the at least one indicator composition to housing parts of the filter device. It is necessary to apply the indicator composition to parts of the filter device which come in contact with the filtered fluid. In case the adsorption capacity of the adsorbent is reached, nitrogen oxides, NOₓ, pollutant will come into contact with the indicator composition and exhaustion of the NOₓ adsorption capacity of the adsorbent will be indicated. It is therefore preferred to apply the indicator composition adjacent to the at least one adsorbent. In one embodiment the indicator composition is applied directly to the filter substrate comprising the at least one adsorbent, downstream to the at least one adsorbent. *"Downstream"* means that during filtration the filtration fluid first passes the at least one adsorbent and subsequently contacts the indicator composition.

The term *"indicator composition"* as used in the present application refers to a composition which comprises or consists of at least one dye which is capable to change the optical appearance upon exposure to NOₓ. The indicator composition denotes a composition which can be applied by spraying, coating, foaming, exhausting and calendering, deposition, padding techniques onto the filter device or to the filter substrate. In one embodiment the indicator composition functions as an auxiliary carrier for the nitrogen oxide, NOₓ indicator composition sensitive dye. It is preferred that the indicator composition is applied in a liquid form and is based on an aqueous and/ or an organic solvent composition. The indicator composition may further contain auxiliary components to ensure a good dyeing behavior of the dye to the filter device or the filter substrate.

In one embodiment, the filter device according to the invention is characterized in that the at least one dye of the at least one indicator composition start fading, in case the indicator composition comes in contact with nitrogen oxides, NOₓ. The fading of the color shade of the indicator composition indicates whether the adsorption capacity limit of the device of the filter substrate is reached and the filter device must be replaced. The fading is best recognized by visible inspection. It is preferred to select blue dyes which start fading upon exposure to nitrogen oxide, NOₓ.

In one embodiment of the first aspect of the invention the at least one dye comprised in the at least one indicator composition is chosen from the group consisting of anthraquinone dyes, bisoxazin dyes, flavin dyes, or mixtures thereof

In one embodiment of the first aspect of the invention the at least one dye is an anthraquinone compound of formula (I): 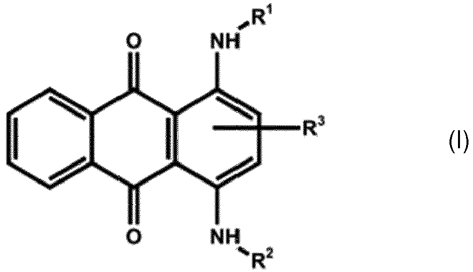 wherein
R¹, R² signifies independently from each other hydrogen, linear, branched or cyclic C₁₋₁₀ alkyl, phenyl, wherein the phenyl is a residue of formula (Ia) 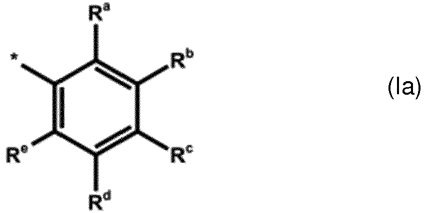 wherein
- R^{a}, R^{b}, R^{c}, R^{d}, R^{e}: signify independently from each other hydrogen, sulfo group, sulfon amid group, sulfon anilido group, amino group, C₁₋₆ alkyl substituted secondary or tertiary amino group, C₁₋₆ acylated amino group, C₁₋₆ alkyl and C₁₋₆ acyl substituted amino group
- *: signifies the binding to the anthraquinone bound amino group.

- R³: signifies hydrogen, sulfo group, linear, branched or cyclic C₁₋₆ alkoxy, or sulfo-phenyl substituted C₁₋₆ alkoxy, or phenoxy of formula (lb): 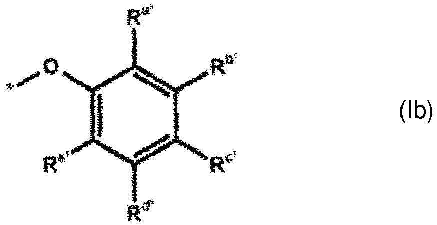 wherein
R^{a}', R^{b}', R^{c}', R^{d}', R^{e}' signify independently from each other hydrogen, sulfo group, sulfon amid group, sulfon anilido group, amino group, C₁₋₆ alkyl substituted secondary or tertiary amino group, C₁₋₆ acylated Amino group, C₁₋₆ alkyl and C₁₋₆ acyl substituted amino group,
* signifies the binding to the anthraquinone moiety

Dyes of the aforementioned type were found to be highly sensitive to nitrogen oxides NOₓ and exhibit a fading characteristic starting from visible blue when being contacted with.

In one further embodiment, the dye is a flavin dye of formula (II): 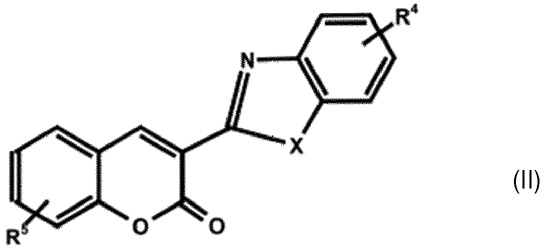 wherein
- R⁴, R⁵: signify independently from each other hydrogen, sulfo group, sulfon amid group, sulfon anilido group, amino group, C₁₋₆ alkyl substituted secondary or tertiary amino group, C₁₋₆ acylated amino group, C₁₋₆ alkyl and C₁₋₆ acyl substituted amino group,
- X: signifies, oxygen, hydrogen substituted nitrogen, C₁₋₆ alkyl substituted nitrogen;

Similar to the aforementioned anthraquinone dyes, flavin dyes of the formula (II) also exhibit a high sensitivity towards NOₓ and excellent visual inspection properties, due to the fading characteristic starting from visible blue when being contacted with NOₓ.

In one further embodiment, the filter device of the first aspect is characterized in that the at least one dye is a bisoxazin dye of formula (III): 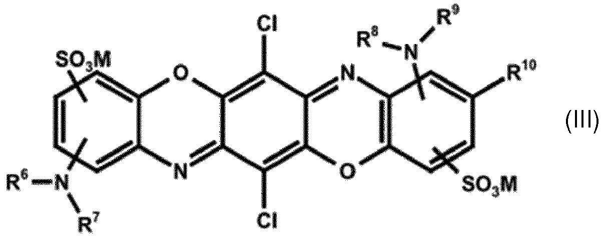 wherein
- R⁶, R⁷, R⁸ R⁹, R¹⁰: signify independently from each other hydrogen, linear or, branched or cyclic C₁₋₆ alkyl, C₁₋₆ acyl,
- M: signifies alkali metal or hydrogen.

Like the aforementioned anthraquinone and flavin dyes of the formulae (I) and (II) bisoxazin dyes of formula (III) also exhibit a high sensitivity towards NOₓ and excellent visual inspection properties, due to the fading characteristic starting from visible blue when being contacted with NOₓ.

The term "sulfo" relates to a -SO₃ M moiety, wherein M is a cation balancing the negative charge of -SO₃ selected from the group of hydrogen, lithium, sodium, potassium, or mixtures thereof.

In one further embodiment of the invention the filter device of the first aspect is characterized in that the indicator composition comprises a mixture of different dyes in particular different dyes of one or more of the aforementioned anthraquinone, flavin or bisoxazin dyes.

In one further embodiment of the invention the filter device of the first aspect is characterized in that the at least indicator composition comprises an anthrachinone dye of formula (I) wherein
- R¹: signifies hydrogen, linear, branched or cyclic C₁ to C₁₀ alkyl, and
- R²: signifies linear or branched or cyclic C₁ to C₆ alkyl, or phenyl, wherein the phenyl exhibits the formula structure of formula (la), and
- R³: signifies hydrogen, sulfo group, sulfo-phenyl substituted C₁ to C₆ alkoxy or phenoxy of formula (lb).

In one further embodiment of the invention the filter device of the first aspect is characterized in that the at least one indicator composition comprises an anthrachinone dye of formula (I) wherein:
- R¹: signifies hydrogen, or linear C₁ to C₄ alkyl, preferably n-butyl, and
- R²: signifies linear or branched or cyclic C₁ to C₆ alkyl, preferably linear or branched C₁ to C₄ alkyl group, or cyclohexyl group, phenyl group of formula (la), and
- R³: signifies hydrogen, sulfo group or sulfo-phenyl substituted C₁ to C₆ alkoxy group.

In one further embodiment of the invention the filter device of the first aspect is characterized in that the indicator composition comprises an anthrachinone dye of formula (I) wherein:
- R¹: signifies hydrogen
- R²: signifies phenyl of formula (la), and
- R³: sulpho-phenyl substituted ethoxy group.

The at least one dye comprised in the at least one indicator composition exhibits an emission maximum in the range of visible blue light, preferably in the wavelength range of 460 to 480 nm. The emission wavelength of 460 to 480 nm corresponds to blue light. It was observed that visible inspection of a fading characteristic starting from visible blue when being contacted with NOₓ is best recognizable to the human eye. Therefore, using a dye in the indicator composition which exhibits an initial emission maximum in the range of visible blue light provides the best sensitivity to be visibly inspected.

The at least one adsorbent capable of adsorbing nitrogen oxides, NOₓ, comprises or consists of activated carbon. Activated carbon is a commonly known adsorbent material which exhibits excellent adsorption properties towards nitrogen oxides, NOₓ. It is also possible that other adsorbents are also present, like e.g. zeolithes.

In one embodiment of the first aspect of the invention, wherein the filter device accommodates at least one filter substrate comprising the at least one adsorbent capable of adsorbing nitrogen oxides, NOₓ, the at least one indicator composition comprising the at least one dye sensitive towards nitrogen oxides, NOₓ, is arranged on the at least filter substrate.

The at least one filter substrate comprises or consists of fibrous material like non-woven, fleece or mesh, membrane like tubular, hollow fiber or flat sheet membrane, particulates like granules, powder or beads, or composites thereof. The term *"composite"* means that different material structures may be combined to form a filter substrate. In this respect particulates like granulates or beads may be combined with non-wovens to form a filter substrate which is used in the filter device according to the invention. In this respect the particulates can be responsible for adsorption processes wherein the non-wovens can be responsible for size exclusion filtration and mechanical strength of the filter substrate.

The filter substrate can consist of one or more layers. The layers consist of the same or of different material structures mentioned above. Layered filter substrates are preferred since they provide a large area through which filtration may be performed. Thus, there is a large area to which the indicator composition can be applied to. This provides better visible inspection properties and the color fading of the indicator composition provides reliable results.

In one further embodiment of the first aspect of the invention, wherein the filter device accommodates at least one filter substrate comprising the at least one adsorbent capable of adsorbing nitrogen oxides, NOₓ, at least one layer of the at least one filter substrate comprises or consists of the at least one adsorbent capable of adsorbing nitrogen oxides, NOₓ, the adsorbent being preferably activated carbon. Accordingly the filter substrate can be a composite of material structures. Thus, it is possible to use activated carbon in a particulate shape as an adsorbent in a flat sheet filter substrate.

Further, the at least one filter substrate comprises at least one layer comprising the at least one indicator composition. It is advantageous to apply the indicator composition directly to one layer of the layered filter substrate such that the indicator composition is in an adjacent position to the adsorbent layer.

In one further embodiment of the first aspect of the invention, wherein the filter device accommodates at least one filter substrate comprising the at least one adsorbent capable of adsorbing nitrogen oxides, NOₓ, the at least one layer comprising the at least one indicator composition is deposed to one surface of the at least one filter substrate. The filter substrate can be arranged in the filter device such that one surface of the filter substrate faces the ingress side of the filter device and the other exposed layer faces the egress side of the filter device. In this arrangement, the surface to which the indicator composition is deposed is located downstream the layer which comprises the activated carbon. The term *"downstream"* defines the flow direction of the fluid in the filter device from the ingress side to the egress side. The adsorbent layer which comprises activated carbon can also be an intermediate layer which is enclosed between two fibrous material layers from which one or both layers may be surface layers.

In an alternative embodiment of the first aspect of the invention, wherein the filter device accommodates at least one filter substrate comprising the at least one adsorbent capable of adsorbing nitrogen oxides, NOₓ, the indicator composition is deposed to one surface of the filter device. In this embodiment, the surface to which the indicator composition is deposed is located downstream the filter substrate comprising the at least one adsorbent.

In one further embodiment of the first aspect of the invention, wherein the filter device accommodates at least one filter substrate comprising the at least one adsorbent capable of adsorbing nitrogen oxides, NOₓ, the at least one dye sensitive to nitrogen oxides, NOₓ, present in the at least one indicator composition in the at least one layer of the at least one filter substrate is present in an amount of 0.1 g/kg to 100 g/kg, wherein the unit g/kg denotes the ratio of the amount of the dye in gram to the material weight of the layered filter substrate in kilogram through which the filtration fluid can pass. The amount of the dye on the fibrous material must be sufficient to effect an indicating color fading of a color, which is preferably blue. On the other hand, the amount of the dye in the exposed fibrous material layer must not be too high since a too high amount of the dye will compensate NOₓ passing through the exhausted filter device before reacting into a color fading. Therefore, the amount of at least one dye in the at least one indicator composition is 0.1 g/kg or more, in particular 10 g/kg or more, in particular 15 g/kg or more and at most 100 g/kg or less, in particular 50 g/kg or less, or at most 30 g/kg or less, or between 1 g/kg and 100 g/kg, or between 10 g/kg and 50 g/kg, or between 15 g/kg and 30 g/kg.

A second aspect of the invention relates to a method of monitoring the performance of a filter device in the filtration process of gaseous media containing nitrogen oxide, NOₓ, wherein the method comprises the following steps:
- providing a filter device according to the invention, comprising at least one adsorbent and at the least one indicator composition,
- exposing said filter device to a gaseous media containing nitrogen oxide, NOₓ, wherein the gaseous media containing nitrogen oxide, NOₓ, passes the adsorbent first and subsequently contacts the indicator composition,
- observing a color fading of the indicator composition, once the adsorbent in the filter substrate is depleted.

According to the second aspect of the invention it is possible to monitor the NOₓ adsorption capacity of a filter device according to the first aspect of the invention by observing the color fading of the indicator composition. It is advantageous that the method allows for visibly inspection of the performance of the filter device since it can be easily decided whether the filter device provides a sufficient NOₓ adsorption capacity or whether the filter device must be replaced.

In one embodiment of the second aspect of the invention the color fading of the indicator composition is measured according to standard ISO 105-G01:2016-12. In general, the color fading of the indicator composition applied to the filter device or the filter substrate can be determined following the measurement specifications described in the DIN EN ISO standard No. 105-G01:2016-12 which is hereby included by reference.

A third aspect of the invention relates to the use of a dye as defined in at least one embodiment of the first aspect of the invention for indication of the presence of nitrogen oxides, NOₓ, by color fading.

In one embodiment of the third aspect of the invention the dye is used in a filter device or a filter substrate according to at least one embodiment of the first aspect of the invention

A fourth aspect of the invention relates to the use of a filter device or a filter substrate according to at least one embodiment of the first aspect of the invention in a purification process of exhaust air, combustion gas and circulation air.

A fifth aspect of the invention relates to the use of a dye as defined above with reference to the first aspect of the invention for indication of the presence of nitrogen oxides, NOₓ, by color fading. Preferably, the dye is used in a filter device as defined above with respect to the first aspect of the invention. The fading of the dye is measured according to standard ISO 105-G01:2016-12, and preferably starts from blue (emission maximum preferably in the wave-length range of 462 to 480 nm).

A sixth aspect of the invention relates to a method of manufacturing a filter device wherein the filter device accommodates at least one filter substrate comprising the at least one adsorbent capable of adsorbing nitrogen oxides, NOₓ, according to at least one embodiment of the first aspect of the invention wherein the method comprises the steps:
- providing at least one filter substrate comprising at least one adsorbent capable of adsorbing nitrogen oxides, NOₓ,
- providing an indicator composition comprising at least one dye sensitive towards nitrogen oxides, NOₓ,
- applying the indicator composition to one exposed layer of the filter substrate by padding spraying, coating, exhausting, foaming, calendaring or deposition.

### DESCRIPTION OF THE INVENTION WITH REFERENCE TO THE FIGURES

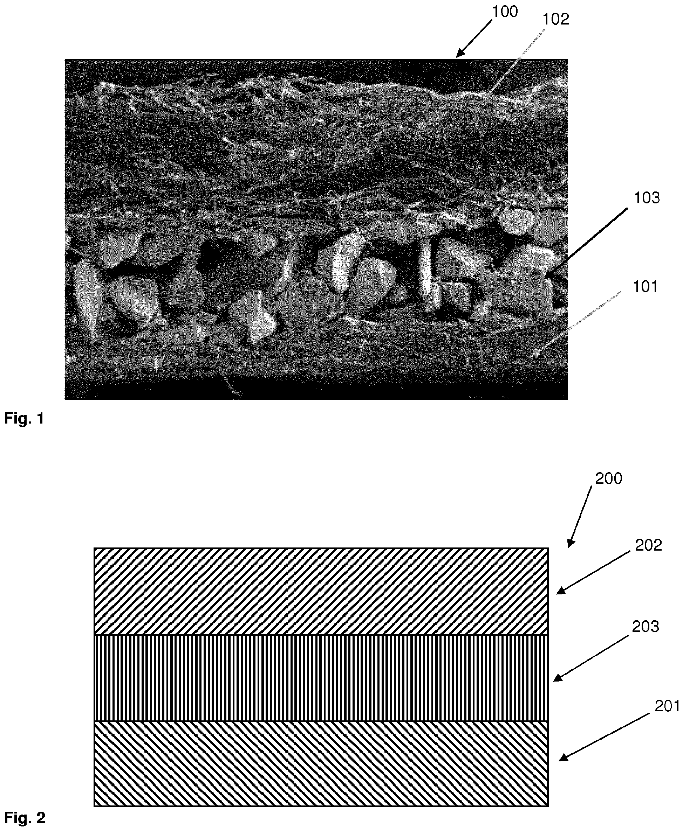

Fig. 1 is an electron microscopy photograph of a cross sectional view of a flat sheet layered filter substrate (100) for use in a filter device according to the invention. The cross section shows a view of a plain cut perpendicular to the layered flat sheet filter substrate. The filter substrate (100) is a three-layered filter substrate comprising two exposed non-woven layers (101, 102) and an intermediate particulate adsorbent layer (103) comprising granules of activated carbon for the adsorption of nitrogen oxides, NOₓ. The non-woven layer 101 comprises an indicator composition. The arrangement of the filter substrate in a filter device according to the invention is such that the inflowing filtration fluid contacts and permeates first non-woven layer (102), second the particulate adsorption layer comprising activated carbon (103) and third the non-woven layer (101) comprising the indicator composition with the nitrogen oxide, NOₓ, sensitive dye. In this arrangement, the non-woven layer (101) comprising the indicator composition, is located downstream the nitrogen oxide, NOₓ, adsorption layer.
Fig. 2 shows a schematic view of a three-layered flat sheet filter substrate (200) for use in a filter device according to the invention. The flat sheet filter substrate (200) is built from two exposed non-woven layers (201, 202), and an intermediate layer comprising the nitrogen oxide, NOₓ, adsorbent. The intermediate layer (203) comprises activated carbon enclosed by the two exposed non-woven layers (201, 202). Fig.2 shows an embodiment (200) with an exposed layer (202) which is preferred used in air filtration systems. According to the invention the filter substrate will be implemented in a filter device such that the inflowing filtration fluid contacts and permeates first the non-woven layer (202), second the particulate adsorption layer comprising activated carbon (203) and third the non-woven layer (201) comprising the indicator composition with the nitrogen oxide, NOₓ, sensitive dye. In this arrangement, the non-woven layer (201) comprising the indicator composition, is located downstream the NOₓ adsorption layer.

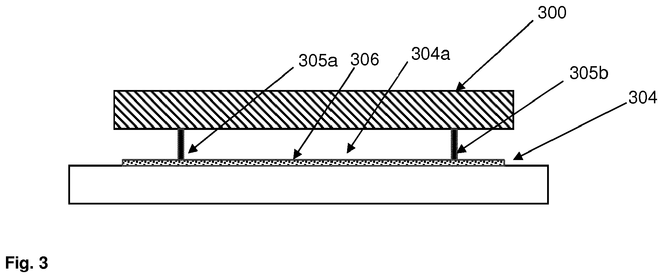

Fig. 3 shows a sectional schematic embodiment of a filter substrate (300) comprising the at least one adsorbent capable of adsorbing nitrogen oxides, NOₓ, fixed via holding devices (305a, 305b) to a surface part of the filter device (304). The shown part of the filter device (304) comprises a surface (304a) to which a layer (306) comprising the indicator composition with the nitrogen oxide, NOₓ, sensitive dye is deposed. According to the embodiment shown in Fig. 3 the filter substrate will be implemented in the filter device such that the inflowing filtration fluid contacts and permeates first the filter substrate (300). Second, the filtered fluid having passed the filter substrate (300) comes into contact with the indicator composition with the nitrogen oxide, NOₓ, sensitive dye comprised in the layer (306) which is deposed to the surface part (304a) of the filter device. In the shown schematic view the layer (306) comprising the indicator composition, is located downstream the NOₓ adsorption layer (300).

The advantage of the filter substrates as depicted in figures 1 and 2 is that it can be visually inspected if the adsorption capacity limit of the adsorbent layer (103, 203) is achieved, i.e. nitrogen oxides, NOₓ, can pass through the adsorbent layer (103, 203) without being adsorbed there. The nitrogen oxides, NOₓ, passing through the adsorbent layer (103, 203) then get into contact with the non-woven layer comprising the indicator composition (101, 201) and thus causing a fading of the color starting from blue.

### EXAMPLES

If not indicated otherwise, 'parts' mean parts by weight. In the following, the invention will be explained in more detail with reference to examples. However, the invention is not to be restricted to the following examples.

### Application Example 1a

A dyebath at 40°C, consisting of 2000 parts of water, 1 part of a weakly cation-active levelling agent which is based on an ethoxylated aminopropyl fatty acid amide and which has affinity for dye, 0.25 parts of the dye having the formula (IV): 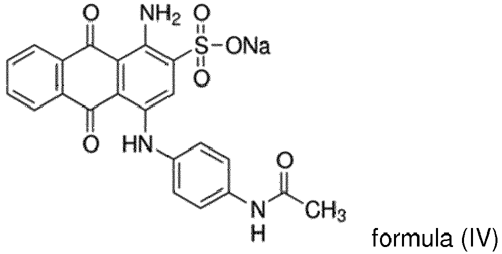 and adjusted to pH 5 with 1 to 2 parts of 40% acetic acid is entered with 100 parts of a flat non-woven nylon-6 fabric. After 10 minutes at 40°C, the dyebath is heated to 98°C at a rate of 1°C per minute and then left at boiling temperature for 45 to 60 minutes. Thereafter it is cooled down to 70°C during 15 minutes. The dyed fabric is removed from the bath, rinsed with hot and then with cold water and dried. The result obtained is a blue polyamide dyeing that has a good levelness, good light and wet/wash fastnesses and a good build-up behaviour.

### Application Example 1b

A dyebath at 40°C, consisting of 2000 parts of water, 1 part of a weakly cation-active levelling agent which is based on an ethoxylated aminopropyl fatty acid amide and which has affinity for dye, 0.3 parts of the dye of formula (IV) and adjusted to pH 5.5 with 1 to 2 parts of 40% acetic acid is entered with 100 parts of a flat non-woven nylon-6,6 fabric. After 10 minutes at 40°C, the dyebath is heated to 120°C at a rate of 1.5°C per minute and then left at 120°C for 15 to 25 minutes. Thereafter it is cooled down to 70°C during 25 minutes. The dyed substrate is removed from the bath, rinsed with hot and then with cold water and dried. The result obtained is a blue polyamide dyeing that has a good levelness, good light and wet/wash fastness and a good build-up behaviour.

### Application Example 1c

A dyebath at 40°C, consisting of 4000 parts of water, 1 part of a weakly amphoteric levelling agent which is based on a sulphated ethoxylated fatty acid amide and which has affinity for dye, 0.4 parts of the dye formula (IV) and adjusted to pH 5 with 1 to 2 parts of 40% acetic acid is entered with 100 parts of flat non-woven wool fabric. After 10 minutes at 40°C, the dyebath is heated to boiling temperature at a rate of 1°C per minute and then left at boiling temperature for 40 to 60 minutes. Thereafter it is cooled down to 70°C during 20 minutes. The dyed substrate is removed from the bath, rinsed with hot and then with cold water and dried. The result obtained is a blue wool dyeing that has a good levelness, good light and wet/wash fastness and a good build-up behaviour.

### Application Example 1d

100 parts of a flat non-woven nylon-6 material are padded with a 50°C liquor consisting of
- 40: parts of the dye of formula (IV),
- 100: parts of urea,
- 20: parts of a non-ionic solubilizer based on butyldiglycol,
- 15-20: parts of acetic acid (to adjust the pH to 4),
- 10: parts of a weakly cation-active levelling agent which is based on an ethoxylated aminopropyl fatty acid amide and has affinity for dye, and
- 810-815: parts of water (to make up to 1000 parts of padding liquor).

The material thus impregnated is rolled up and left to dwell in a steaming chamber under saturated steam conditions at 85 to 98°C for 3 to 6 hours for fixation. The dyed substrate is then rinsed with hot and cold water and dried. The result obtained is a blue nylon dyeing that has a good levelness, good light and wet/wash fastness and a good build-up behaviour.

### Application Example 1e

A dyebath at 40°C, consisting of
- 2000: parts of water,
- 1: parts of a weakly cation-active levelling agent which is based on an ethoxylated aminopropyl fatty acid amide and has affinity for dye,
- 0.3: parts of dye of formula (IV)
- 0.3: parts of a blue dye according to Example 4,
- 0.3: parts of a blue dye according to Example 6,
adjusted to pH 5.5 with 1 to 2 parts of 40% acetic acid is entered with 100 parts of flat non-woven nylon-6,6 fabric. After 10 minutes at 40°C, the dyebath is heated to 120°C at a rate of 1.5°C per minute and then left at 120°C for 15 to 25 minutes. Thereafter it is cooled down to 70°C during 25 minutes. The dyed substrate is removed from the bath, rinsed with hot and then with cold water and dried. The result obtained is a bluish coloured polyamide dyeing that has a good levelness, good light and wet/wash fastness and a good build-up behaviour. The nitrogen oxide, NOₓ sensitiveness of the dyed non-woven according to Application Examples 1a to 1e was measured according to DIN EN ISO 105-G01:2016-12 and was determined to be grade 1 to 2.

### Comparative Application Example 1f

A composition according to the preparation of Example 1a is applied to a non-woven material according to specification of Example 1a with the difference that a dye having the formula V 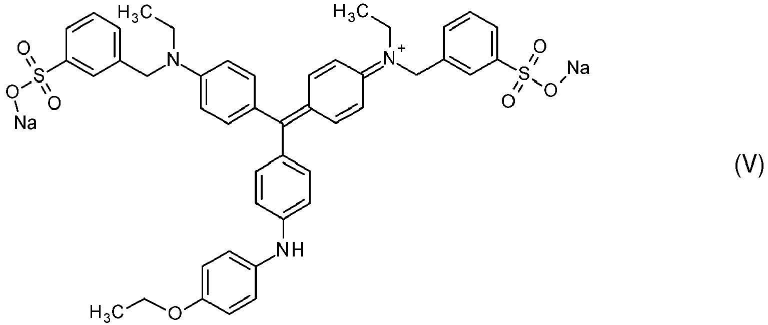 was used. The nitrogen oxide, NOₓ sensitiveness of the dyed non-woven obtained in Example 1f was measured according to DIN EN ISO 105-G01:2016-12 and was determined to be grade 4.

### Measurement of nitrogen oxide, NOₓ, sensitiveness of the dyes

NOₓ-sensitiveness was measured relying on the test method for determining the colour fastness of dyes described in DIN EN ISO 105-G01:2016-12.

A non-woven dyed test specimen prepared according to the Application Examples, and a test control fabric prepared as defined in DIN EN ISO-G01, were fastened into a chamber of a test apparatus. The chamber was closed, and test specimen and control fabric are exposed to nitric oxide inside the chamber by injecting 0.65ml nitric oxide per litre chamber capacity. After the test control fabric has faded to the extent shown by the standard of fading, test specimen, test control fabric and an unexposed specimen of the textile from which the test specimen was taken were immersed into a buffered urea solution. After 5 minutes, specimens and test control fabric were squeezed rinsed and dried. Change of colour of the test specimen against the corresponding unexposed specimen was determined using the grey scale. Sensitiveness was determined in gradations from 1 (=very good sensitiveness) to 6 (= very poor sensitiveness). All examples exhibit a sensitiveness from grade 1 (very good) to grade 3 (=satisfying sensitiveness). A nitrogen oxide, NOₓ sensitiveness of grade 1 to 3 are suitable for the use in indicator compositions to indicate the nitrogen oxide, NOₓ adsorption capacity of filter devices according to the invention.

### Examples 2 to 14

Indicator compositions were prepared containing dyes (2) to (14) of table 1 following the process specifications of Application Examples 1a to 1e. The indicator compositions were further applied to non-woven specimens corresponding to the procedure described in Application Example 1a to 1e. The dyes provided blue colored indicator compositions having a good sensitiveness to nitrogen oxide containing gases.

**Table 1**

| Example | Dyes | Sensitiveness | **λₘₐₓ** of absorbtion |
|---|---|---|---|
| 2 | 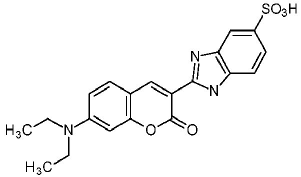 | 1-2 | 404 |
| 3 | 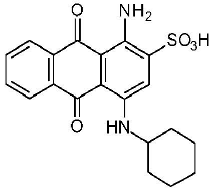 | 2 | 571 |
| 4 | 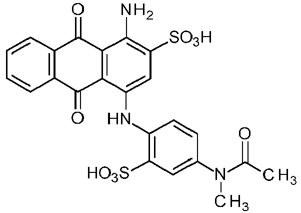 | 2-3 | 573 |
| 5 | 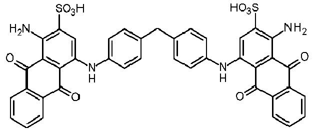 | 2 | 568 |
| 6 | 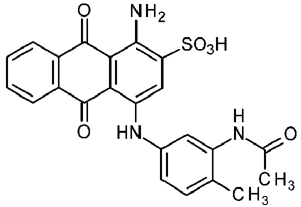 | 2 | 570 |
| 7 | 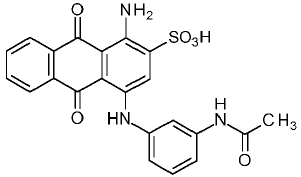 | 2 | 572 |
| 8 | 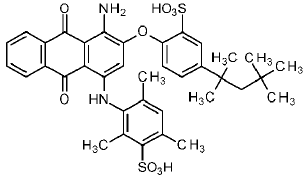 | 2 | 556 |
| 9 | 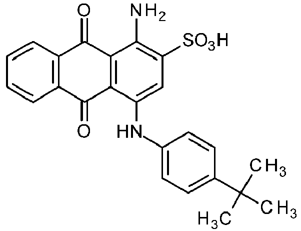 | 2-3 | 568 |
| 10 | 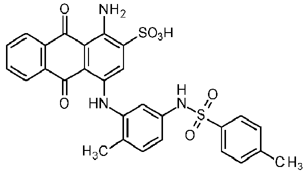 | 2-3 | 570 |
| 11 | 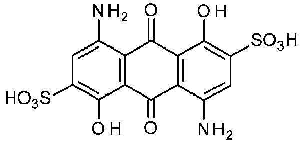 | 2-3 | 572 |
| 12 | 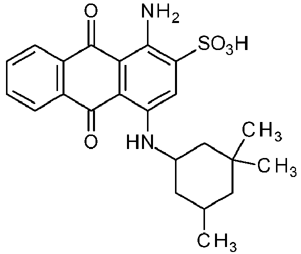 | 2-3 | 574 |
| 13 | 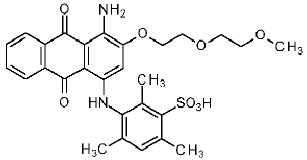 | 1-2 | 553 |
| 14 | 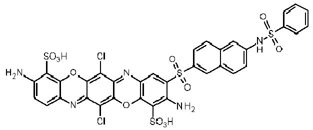 | 2-3 | 575 |

## Claims

1. Filter device comprising at least one adsorbent capable of adsorbing nitrogen oxides, NOₓ, and at least one indicator composition, wherein the at least one indicator composition comprises at least one dye and wherein the at least one dye is sensitive towards nitrogen oxides, NOₓ

2. Filter device according to claim 1, wherein the filter device accommodates at least one filter substrate comprising the at least one adsorbent capable of adsorbing nitrogen oxides, NOₓ.

3. Filter device according to claim 1 or 2 wherein the at least one dye is chosen from the group consisting of anthraquinone dyes, bisoxazin dyes, flavin dyes, or mixtures thereof.

4. Filter device according to at least one of the preceding claims, wherein the at least one dye is an anthraquinone dye of formula (I): 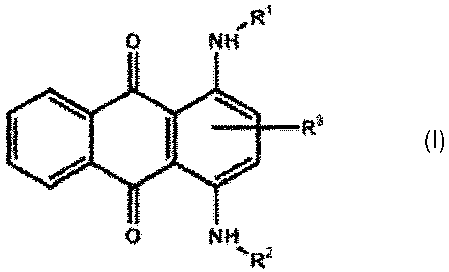 wherein
R¹, R² signifies independently from each other hydrogen, linear, branched or cyclic C₁₋₁₀ alkyl, phenyl, wherein the phenyl is a residue of formula (Ia) 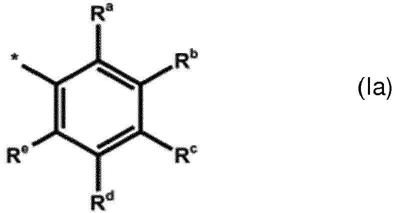 wherein
R^{a}, R^{b}, R^{c}, R^{d}, R^{e} signify independently from each other hydrogen, sulfo group, sulfon amid group, sulfon anilido group, amino group, C₁₋₆ alkyl substituted secondary or tertiary amino group, C₁₋₆ acylated amino group, C₁₋₆ alkyl and C₁₋₆ acyl substituted amino group
* signifies the binding to the anthraquinone bound amino group,
R³ signifies hydrogen, sulfo group, linear, branched or cyclic C₁₋₆ alkoxy, or sulfo-phenyl substituted C₁₋₆ alkoxy, or phenoxy of formula (lb): 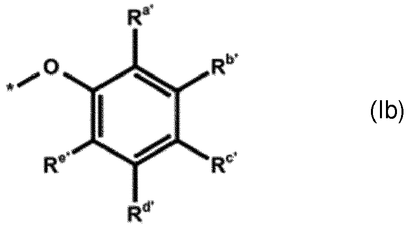 wherein
R^{a}', R^{b}', R^{c}', R^{d}', R^{e}' signify independently from each other hydrogen, sulfo group, sulfon amid group, sulfon anilido group, amino group, C₁₋₆ alkyl substituted secondary or tertiary amino group, C₁₋₆ acylated amino group, C₁₋₆ alkyl and C₁₋₆ acyl substituted amino group,
* signifies the binding to the anthraquinone moiety;
or the at least one dye is a flavin dye of formula (II): 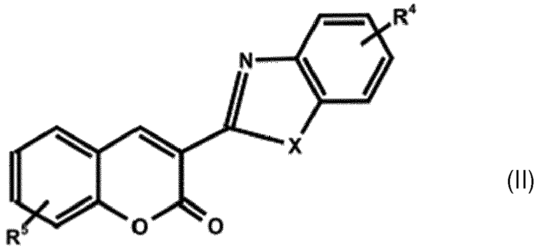 wherein
R⁴, R⁵ signify independently from each other hydrogen, sulfo group, sulfon amid group, sulfon anilido group, amino group, C₁₋₆ alkyl substituted secondary or tertiary amino group, C₁₋₆ acylated amino group, C₁₋₆ alkyl and C₁₋₆ acyl substituted amino group,
X signifies oxygen, hydrogen substituted nitrogen, C₁₋₆ alkyl substituted nitrogen;
or, the at least one dye is a bisoxazin dye of formula (III): 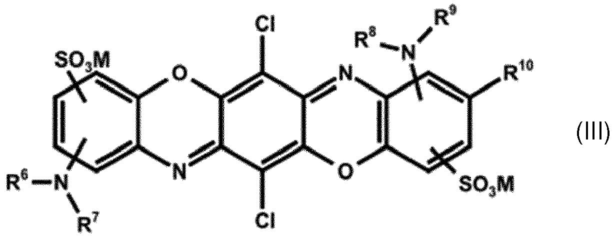 wherein
R⁶, R⁷, R⁸ R⁹, R¹⁰ signify independently from each other hydrogen, linear or branched or cyclic C₁₋₆ alkyl, C₁₋₆ acyl,
M signifies alkali metal or hydrogen.

5. Filter device according to at least one of the preceding claims, wherein the at least one dye comprised in the at least one indicator composition exhibits an emission maximum in the range of visible blue light, preferably in the wavelength range of 460 to 480 nm.

6. Filter device according to at least one of the preceding claims, wherein the at least one adsorbent capable of adsorbing nitrogen oxides, NOₓ, comprises or consists of activated carbon.

7. Filter device according to at least one of the claims 2 to 6 wherein the indicator composition comprising the at least one dye sensitive towards nitrogen oxides, NOₓ is arranged on the filter substrate.

8. Filter device according to at least one of the claims 2 or 7 wherein the filter substrate consists of one or more layers.

9. Filter device according to claim 8 wherein the one or more layers of the at least one filter substrate, comprises or consists of fibrous material like non-woven, fleece or mesh, membrane like tubular, hollow fiber or flat sheet membrane, particulates like granules, powder or beads, or composites thereof.

10. Filter device according to claim 8 or 9 wherein at least one layer of the at least one filter substrate comprises or consists of the at least one adsorbent capable of adsorbing nitrogen oxides, NOₓ, the adsorbent being preferably activated carbon.

11. Filter device according to claim 10 wherein the at least one layer of the at least one filter substrate comprising or consisting of the at least one adsorbent capable of adsorbing nitrogen oxides, NOₓ, preferably activated carbon, is a particulate layer.

12. Filter device according to at least one of the claims 7 to 11 wherein the at least one filter substrate comprises at least one layer comprising the at least one indicator composition.

13. Filter device according to claim 12 wherein the at least one dye sensitive to nitrogen oxides, NOₓ, present in the at least one indicator composition in at least one layer of the at least one filter substrate is present in an amount of 0.1 g/kg to 100 g/kg with regard to the total weight of the filter substrate.

14. Method of monitoring the performance of a filter device in the filtration process of gaseous media containing nitrogen oxide, NOₓ, comprising the following steps:
• providing a filter device according to at least one of the claims 1 to 13, comprising at least one adsorbent and the at least one indicator composition,
• exposing said filter device to a gaseous media containing nitrogen oxides, NOₓ, wherein the gaseous media containing nitrogen oxides, NOₓ, passes the adsorbent first and subsequently contacts the indicator composition,
• observing a color fading of the indicator composition, once the adsorbent in the filter device or the filter substrate is depleted.

15. Method according to at least one of claims or wherein the color fading of the indicator composition is measured according to standard ISO 105-G01:2016-12.

16. Use of a dye as defined in at least one of the claims 1 to 5 for indication of the presence of nitrogen oxides, NOₓ, by color fading.

17. Use of a dye according to claim 16 wherein the dye is used in a filter device according to at least one of the claims 1 to 13.

18. Use of a filter device according to at least one of the claims 1 to 13 in a purification process of exhaust air, combustion gas and circulation air.

19. Method of manufacturing a filter device according to at least one of the claims 2 to 13 comprising the steps:
• providing at least one filter substrate comprising at least one adsorbent capable of adsorbing nitrogen oxides, NOₓ,
• providing an indicator composition comprising a dye sensitive towards nitrogen oxides, NOₓ,
• applying the indicator composition to one exposed layer of the filter substrate by padding spraying, coating, exhausting, foaming, calendaring or deposition.
